# EUROPEAN PATENT SPECIFICATION

(11) **EP 3 916 074 B1**
(45) Date of publication and mention of the grant of the patent: **05.07.2023**
(21) Application number: 20382450.3
(22) Date of filing: 27.05.2020
(51) Int. Cl.: C10L 1/223, C10L 10/10

(54) **SYNERGISTIC ANTIKNOCK FUEL ADDITIVE AND GASOLINE COMPOSITION COMPRISING THE SAME**
SYNERGISTISCHER ANTIKLOPF-KRAFTSTOFFZUSATZ UND BENZINZUSAMMENSETZUNG DAMIT
ADDITIF DE CARBURANT ANTIDÉTONANT SYNERGIQUE ET COMPOSITION D'ESSENCE LE COMPRENANT

(43) Date of publication of application: 01.12.2021
(73) Proprietor: Repsol, S.A., 28045 Madrid (ES)
(72) Inventor: DELGADO DIESTRE, Jesús, E-28935 Móstoles, Madrid (ES); NIETO RIAGUAS, Ana, E-28935 Móstoles, Madrid (ES)
(74) Representative: ABG Intellectual Property Law, S.L.

(56) References cited:
- WO-A2-2012/023872
- AU-A1- 2009 333 162
- RU-C1- 2 633 357

## Description

### FIELD OF THE INVENTION

The present invention relates to the area of petrochemical industry. More specifically, the present invention relates to a synergistic antiknock fuel additive comprising a mixture of N-methyl-p-anisidine and m-toluidine; to the use of said additive to increase the octane number of a gasoline; and to a gasoline fuel composition comprising said additive.

### BACKGROUND

Gasoline with higher octane enables higher compression ratios in combustion engines, which improves engine efficiency, contributing to a reduction in greenhouse gas (GHG) emissions from transport. Most standard vehicles in advanced markets use a knock detector device that allows the control of engine parameters to the quality of the gasoline in order to avoid knocking; depending on the gasoline octane rating and the operation regime, this control leads to a loss of efficiency (higher consumption) or limitation on performance. Optimization of the operation regimes of most high performance vehicles involves the use of gasoline with an octane number higher than that of standard gasoline.

The most technologically and economically advantageous way for producing gasolines with high octane number is the use of anti-knock additives. The first anti-knock additives or octane boosters used on a large scale were lead tetralkyls, which, due to their toxicity and impact on vehicle catalyst, are now prohibited.

Oxygenates can enhance the octane of gasolines, the most known being methyl tert-butyl ether (MTBE) and ethyl tert-butyl ether (ETBE). Their main drawback is the necessity of using high amounts, which limits the use of cheaper light components in gasoline. Their partial solubility in water has limited the use of ethers in several regions, due to the risk of contamination of groundwater reservoirs. The use of low aliphatic alcohols is allowed in automotive gasoline, such as methanol, ethanol, isopropanol, tert-butyl alcohol or isobutanol. Their capacity for octane boosting is lower than that of ethers and side effects are more remarkable, since they increase significantly the vapor pressure of gasolines and present very high solubility in water. There is a long list of oxygenates that have been evaluated as octane improvers including ketones, esters, furans and carbonates but their use has not been successful due to their cost, harm effects or impact on health and environment.

The use of high efficiency octane enhancers that can be used in lower concentrations has been the focus of several studies. Metallic anti-knock agents alternative to lead compounds, such as MMT or Ferrocene, are very efficient but they tend to lead ash deposits after their combustion and their use is forbidden in most automotive gasoline specifications. Ash-less octane improvers are preferred to metallic ones. Amines, nitrosamines, hidrazines, pyridines and quinolines have been the subject of several reports.

The use of some aromatic amines, and in particular of anilines, to increase the octane number of a base gasoline has been extensively reported, because of their very high efficiency as octane boosters. Aromatic amines are generally more efficient in increasing the octane number than oxygenated additives. However, they usually have a higher price and are sometimes highly toxic (e.g. aniline and o-toluidine).

Documents EP 2014643 A1 and WO 2008/076759 disclose the use of N-methyl-p-anisidine (NMPA) to increase the octane number of hydrocarbon fuels. This aromatic amine shows highly efficient antiknock properties. However, NMPA has a very high price and is a crystalline solid with a melting point of 33-36°C and so could lead to crystallization at low ambient temperatures. Therefore, the handling of this product requires expensive investments or the use of solvents, which reduces the main advantage of aniline compounds since the dosage is increased and it also has an impact on properties that limit the blending of gasoline, such as volatility and density.

One option to reduce said loss of advantages of NMPA, is to improve its handling by combination with solvents capable of enhancing the octane number. Nevertheless, where ethers like ETBE or alcohols like ethanol are used as solvents, high dilution is needed, which increases significantly the final dosage of additive and so has a significant impact on final gasoline cost and properties.

Document RU 2633357 C1 discloses a multifunctional additive for automotive gasoline comprising a mixture of aliphatic alcohols, antioxidants, detergents and aromatic amines selected from m-toluidine and/or NMPA and/or 2,4-xylidine. This document does not mention a synergistic antiknock effect for any of the combinations of said aromatic amines. Indeed, the ratio of NMPA to m-toluidine disclosed in this document is far from the ratio found in the present invention to provide a synergistic anti-knock effect. This document discloses an additive comprising a very low content of NMPA blended with m-toluidine: 20.5% w/w NMPA and 40.0% w/w m-toluidine, that is a 32% v/v NMPA in the mixture NMPA/m-toluidine. This amount of NMPA is far from the minimum NMPA content of about 45% v/v found by the inventors of the present invention to be required in other to provide a synergistic effect when combined with m-toluidine (considering the uncertainty of the results).

Octane improvement must be adapted to the new automotive engines. Antiknock properties have been related to the combination of both RON (Research Octane number, ASTM D2699) and MON (Motor Octane number, ASTM2700). All specifications require a minimum value for both and octane improvers have been evaluated for their ability to increase both of them. Nevertheless, it is well know that antiknock properties of new engines depends more on high values of RON, whereas the influence of MON is less relevant.

There is still a need for the development of new antiknock agents with excellent antiknock performance, which are non-toxic and economical.

### BRIEF DESCRIPTION OF THE INVENTION

The invention is based on the finding that anti-knock agents m-toluidine (m-tol) and N-methyl-p-anisidine (NMPA) provide a synergistic increase of the octane number of a gasoline when blended at certain ratios. That is, the mixture induces a joint increase of the octane number higher than the sum of the increases of the octane number induced individually by each of these agents at the same concentration in the same gasoline.

Therefore, the present invention provides an anti-knock additive having very high efficiency. Furthermore, due to the synergistic interaction of m-toluidine and NMPA, the desired octane number can be achieved with a lower amount of NMPA by blending it with the much less expensive anti-knock agent m-toluidine, thus resulting in a more economical additive than when NMPA is used alone.

The invention thus provides an antiknock agent with excellent antiknock performance and reduced cost, and which is free of metal.

Additionally, it has been found that m-toluidine is an excellent solvent for NMPA, which is solid at room temperature. m-Toluidine keeps NMPA solubilized at low temperature preventing crystallization of NMPA even at much higher NMPA concentrations than other typical solvents, such as ethanol, ethyl tert-butyl ether, ethylbenzene or2-butoxyethanol. As a result, a stable composition over a wide temperature range is obtained, which ensures that no loss of antiknock properties occurs during prolonged storage and transportation. This improved performance at low temperature enables its transportation, storage and use in liquid form in a wide range of weather conditions.

It has been also surprisingly found by the inventors that m-toluidine reduces the degradation of vehicle engine lubricants contaminated with other anilines, such as NMPA. This contamination occurs in used engine lubricants when aniline antiknock agents are used. Some vehicle manufacturers have shown opposition to the use of this type of octane boosters because of this incompatibility of anilines with the engine lubricant. CEN technical report TR 17491 gives information about aniline and aniline derivatives when used as blending components in unleaded petrol. Some anilines are specifically addressed: aniline, N-methyl aniline, N-ethyl-aniline and N,N-dimethyl aniline. These compounds are reported to reduce the durability of engine lubricants in accelerated rig testing. The inventors have now found that m-toluidine improves the compatibility of NMPA with the engine lubricant, compared to the use of NMPA alone. Degradation of engine lubricant observed at high concentrations of NMPA is clearly reduced when blended with m-toluidine, leading to less viscosity changes of the engine lubricant and less adherent deposits at the end of the test.

Finally, this anti-knock additive shows low toxicity and so it is not necessary to add it to the gasoline at the refinery, but can be added directly to the gasoline at the gas station (with appropriate equipment and safety validation procedures).

Thus, in a first aspect, the invention is directed to a fuel additive comprising a mixture of N-methyl-p-anisidine and m-toluidine in a volume ratio of 45:55 to 95:5.

In a second aspect the invention is directed to a gasoline fuel composition comprising a fuel additive as defined in the first aspect and a gasoline base fuel.

In a third aspect, the present invention is directed to the use a fuel additive as defined in the first aspect of the invention, for enhancing the antiknock properties of a gasoline.

In a further aspect, the present invention is directed to a method for enhancing the Research Octane Number (RON) of a gasoline which comprises adding a fuel additive as defined in the first aspect of the invention to the gasoline.

### FIGURES

Figure 1 represents the actual Research Octane Number (RON) values of a high octane gasoline composition comprising 1% by volume of mixtures of m-toluidine and NMPA at different ratios, compared to the predicted RON values for said compositions.
Figure 2 represents the actual Octane Index (combination RON and MON) values of a gasoline composition comprising between 0.2 to 2% by volume of mixtures of m-toluidine and NMPA at different ratios, for a given experimental value of RON.
Figure 3 represents the actual Research Octane Number (RON) values of a low octane gasoline composition comprising 1% by volume of mixtures of m-toluidine and NMPA at different ratios, compared to the predicted RON values for said compositions.
Figure 4 represents the cloud point of mixtures of NMPA with several solvents at different NMPA concentrations.
Figure 5 shows photographs of drained flasks showing the adherent insolubles in a laboratory simulated used lubricant (CEC L-09 modified test) with a standard gasoline dilution and with a severe octane improver contamination, for compositions comprising different amounts of an antiknock additive comprising either NMPA alone (top row) or a 50:50 mixture of m-toluidine and NMPA (lower row).

### DETAILED DESCRIPTION OF THE INVENTION

Unless defined otherwise, all technical and scientific terms used herein have the same meaning as commonly understood to one of ordinary skill in the art to which this disclosure belongs. As used herein, the singular forms "a" "an" and "the" include plural reference unless the context clearly dictates otherwise.

The Octane Number can be determined either according to the "Research" method (RON) or to the "Motor" method (MON). In the present document, the octane number refers to the Research Octane Number (RON), unless the opposite is clearly stated.

The most common type of octane rating is the Research Octane Number (RON) and gasolines are usually classified based on it. RON is determined by running the fuel in a test engine with a variable compression ratio under controlled conditions, and comparing the results with those for standard mixtures of iso-octane, n-heptane and octane improver. RON can be measured in accordance with ASTM D2699. Motor Octane Number (MON) complements the antiknock performance evaluation and can be measured in accordance with ASTM 2700. The combination of RON and MON defines the octane index and the relative impact of each one depends on the type of engine. Higher RON values result in better antiknock performance in all type of engines, especially in modern engines where MON has less influence.

The terms "octane booster", "anti-knock agent" or "anti-knock additive" are used herein interchangeably to refer to compounds or mixture of compounds that raise the octane number of a fuel composition.

All the embodiments and definitions disclosed in the context of one aspect of the invention are also applicable to the other aspects of the invention.

In a first aspect, the invention is directed to a fuel additive comprising a mixture of N-methyl-p-anisidine and m-toluidine in a volume ratio range of from 45:55 to 95:5. In a preferred embodiment of the invention, the additive comprises a mixture of N-methyl-p-anisidine and m-toluidine in a volume ratio range of from 50:50 to 90:10.

Preferably, the fuel additive comprises a mixture of N-methyl-p-anisidine and m-toluidine in a volume ratio range of 45:55 to 90:10; preferably 45:55 to 85:15; more preferably 50:50 to 75:25.

In an embodiment, the fuel additive of the invention consists of N-methyl-p-anisidine and m-toluidine in the above indicated ratios.

In a particular embodiment, the fuel additive further comprises an antioxidant, preferably in an amount equal to or lower than 1000 mg of antioxidant per Kg of aniline mixture (i.e. per Kg of the mixture of N-methyl-p-anisidine plus m-toluidine), such as from 100 mg/Kg to 1000 mg/kg, preferably from 200 mg/Kg to 1000 mg/kg; more preferably from 500 mg/Kg to 1000 mg/kg.

The inventors have observed that the use of thiourea-based or hydrazine-based antioxidants provides a very high stability to the gasoline fuel composition comprising the fuel additive of the invention. Therefore, in a particular embodiment, the fuel additive of the invention comprises an antioxidant selected from thiourea-based antioxidants, hydrazine-based antioxidants and mixtures thereof, preferably in an amount of 100-1000 mg, more preferably 500-1000 mg, per Kg of aniline mixture. In a preferred embodiment, the antioxidant in the fuel additive is a thiourea-based antioxidant.

Examples of thiourea-based antioxidants include, but are not limited to, compounds represented by the formula R¹R²NC(=S)NR³R⁴, wherein R¹, R², R³ and R⁴ are independently selected from hydrogen C₁₋₄ alkyl optionally substituted by (C₁₋₄ alkyl)amino, di(C₁₋₄ alkyl)amino or C₁₋₄ alkoxy; C₃₋₄ cycloalkyl; and C₆₋₁₀ aryl; or R¹ and R³ may form together a C₂₋₄ alkylene; or R¹ and R² or R³ and R⁴ may form a C₃₋₅ alkylene optionally interrupted with an oxygen or nitrogen atom. Examples of thiourea-based antioxidants include thiourea, 1,3-ethylenethiourea, trimethylthiourea, tributylthiourea, 1,3-diethylthiourea, 1,3-dibutylthiourea, 1,3-bis(dimethylaminopropyl)-2-thiourea, N-phenylthiourea, 1-methoxypropyl-3-butyl-2-thiourea, 1-dimethylaminopropyl-3-butyl-2-thiourea, 1-methoxypropyl-3-cyclohexyl-2-thiourea, 1-dimethylaminopropyl-3-phenyl-2-thiourea, 1-methoxypropyl-3,3-dibutyl-2-thiourea, 1-dimethylaminopropyl-3,3-diisopropyl-2-thiourea, 1-diethylaminopropyl-3-methyl-3-cyclohexyl-2-thiourea, 1-methoxypropyl-3-phenyl-3-cyclohexyl-2-thiourea, 1-methoxypropyl-3-oxydiethylene-2-thiourea, 1-n-butyl-3-oxydiethylene-2-thiourea, 1-diethylaminopropyl-3-oxydiethylene-2-thiourea. Preferably, the thiourea-based antioxidant is 1,3-ethylenethiourea.

Examples of hydrazine-based antioxidants include, but are not limited to, hydrazine, hydrazine hydrate, 1,1-dimethylhydrazine, 1,2-diphenylhydrazine, acetohydrazide, benzohydrazide, cyclohexanecarbohydrazide, adipic acid dihydrazide, sebacic acid dihydrazide, dodecanedioic acid dihydrazide, isophthalic acid dihydrazide, propioic acid hydrazide, salicylic acid hydrazide, 3-hydroxy-2-naphthoic acid hydrazide, benzophenone hydrazone, aminopolyacrylamide, N,N'-bis[3-(3,5-di-tertbutyl-4-hydroxyphenyl)propionyl]hydrazine, isopropylhydrazyne sulfate, tert-butylhydrazine sulfate, decamethylene dicarboxylic acid-bis(N'-salicyloyl hydrazide), isophthalic acid bis(2-phenoxypropionyl hydrazide), N-formyl-N'-salicyloyl hydrazine, N,N'-bis[beta(3,5-di-tert-butyl-4-hydroxyphenyl)propan-acyl]hydrazine, N,N'-bis(3,5-di-tert-butyl-4-hydroxyphenylpropionyl)hydrazine, and N-salicyloyl-N'-aldehydehydrazine. Preferably, the hydrazine-based antioxidant is hydrazine or a hydrate thereof.

In an embodiment, the fuel additive comprises N-methyl-p-anisidine, m-toluidine and an antioxidant, preferably an antioxidant selected from thiourea-based antioxidant, hydrazine-based antioxidant and mixtures thereof. In a further embodiment, the fuel additive consists of N-methyl-p-anisidine, m-toluidine and an antioxidant, preferably a thiourea-based antioxidant, a hydrazine-based antioxidant or mixtures thereof.

In a preferred embodiment, the fuel additive comprises at least 90 wt% or at least 95 wt% of the mixture of N-methyl-p-anisidine and m-toluidine, based on the total weight of the fuel additive.

In a further preferred embodiment, the fuel additive comprises at least 99 wt% or at least 99.5 wt% of the mixture of N-methyl-p-anisidine and m-toluidine, based on the total weight of the fuel additive.

In an embodiment, the fuel additive of the invention does not comprise an alcohol, such as a C₁₋₄ alcohol, including methanol, ethanol, isopropyl alcohol, isobutyl alcohol, tert-butyl alcohol. In a further embodiment, the fuel additive does not comprise isopropyl alcohol.

The fuel additive of the invention provides a synergistic enhancement of the research octane number and is, therefore, a synergistic anti-knock fuel additive.

In a second aspect, the invention is directed to a gasoline fuel composition comprising the fuel additive of the invention and a gasoline base fuel.

In an embodiment, the fuel additive is present in the gasoline fuel composition in an amount of from 0.2% to 5.0% by volume relative to the volume of the gasoline fuel composition; preferably from 0.5% to 3.0% by volume.

In a more preferred embodiment, the fuel additive is present in the gasoline fuel composition in an amount of from 0.5% to 2.0% by volume relative to the volume of the gasoline fuel composition, or from 0.5% to 1.5% by volume; even more preferably from 0.5% to 1.0% by volume.

The gasoline fuel composition can comprise from 0.2% to 5.0% by volume relative to the volume of the gasoline fuel composition, preferably from 0.5% to 3.0% by volume, of a mixture of m-toluidine and NMPA, wherein the volume ratio of NMPA to m-toluidine is from 45:55 to 95:5, preferably from 45:55 to 90:10 or from 45:55 to 85:15, more preferably from 50:50 to 75:25.

In an embodiment, the gasoline fuel composition can comprise from 0.5% to 2.0% by volume relative to the volume of the gasoline fuel composition, preferably from 0.5% to 1.5% by volume, of a mixture of m-toluidine and NMPA, wherein the volume ratio of NMPA to m-toluidine is from 45:55 to 95:5, preferably from 45:55 to 90:10 or from 45:55 to 85:15, more preferably from 50:50 to 75:25.

In an embodiment, the volume ratio of NMPA to m-toluidine in the different aspects and embodiments of the invention is from 45:55 to 90:10. In another embodiment, the volume ratio of NMPA to m-toluidine is from 50:50 to 90:10. In a further embodiment, the volume ratio of NMPA to m-toluidine is from 45:55 to 85:15.

The amount of gasoline base fuel in the gasoline composition is typically at least 95% by volume based on the volume of the gasoline fuel composition, or at least 97% by volume, and preferably at least 98% or 99% by volume. In an embodiment, the amount of gasoline base fuel in the gasoline composition is from 97% to 99.5% by volume based on the volume of the gasoline fuel composition, preferably from 98% to 99.5% by volume.

The gasoline base fuel may be any gasoline suitable for use in an internal combustion engine of the spark-ignition type known in the art, such as automotive engines as well as in other types of engines, such as off road and aviation engines.

Gasoline base fuels typically comprise a mixture of hydrocarbons in the gasoline boiling range. Suitable hydrocarbons in the gasoline boiling range are mixtures of hydrocarbons having a boiling range of from about 25°C to about 232°C and comprise mixtures of saturated hydrocarbons, olefinic hydrocarbons and aromatic hydrocarbons.

In an embodiment, the gasoline base fuel comprises a mixture of saturated hydrocarbons, olefinic hydrocarbons and aromatic hydrocarbons and, optionally, oxygenated hydrocarbons.

Typically, the content of saturated hydrocarbons in the gasoline base fuel is in the range of from 30% to 90% by volume based on the volume of the gasoline base fuel; preferably from 40% to 90% by volume; more preferably from 40% to 80% by volume.

Typically, the content of olefinic hydrocarbons in the gasoline base fuel is in the range of from 2% to 30% by volume based on the volume of the gasoline base fuel; preferably from 5% to 30% by volume; more preferably from 5% to 20% by volume.

Typically, the content of aromatic hydrocarbons in the gasoline base fuel is in the range of from 10% to 60% by volume based on the volume of the gasoline base fuel; preferably from 15% to 45% by volume; more preferably from 25% to 35% by volume.

Typically, the benzene content of the gasoline base fuel is at most 5% by volume; preferably at most 2% by volume; more preferably at most 1% by volume. In an embodiment, the content of benzene in the gasoline base fuel is in the range of from 0.1% to 1% by volume based on the volume of the gasoline base fuel.

Preferably, the gasoline base fuel comprises 30% to 90% by volume of saturated hydrocarbons, from 2% to 30% by volume of olefinic hydrocarbons, and from 15% to 60% by volume of aromatic hydrocarbons, based on the volume of the gasoline base fuel. More preferably, the gasoline base fuel comprises 40% to 80% by volume of saturated hydrocarbons, from 5% to 20% by volume of olefinic hydrocarbons, and from 25% to 35% by volume of aromatic hydrocarbons.

The gasoline base fuel can comprise oxygenated hydrocarbons at from 0.1% to 50% by volume relative to the gasoline base fuel; preferably from 5% to 40% by volume; more preferably from 10% to 40% by volume. Suitable oxygenated hydrocarbons include alcohols (preferably alcohols having from 1 to 4 carbon atoms) and ethers (preferably ethers having 5 or 6 carbon atoms) such as, for example, methanol, ethanol, isopropyl alcohol, isobutyl alcohol, tert-butyl alcohol, methyl tert-butyl ether, di-ispropropyl ether, ethyl tert-butyl ether, tert-amyl methyl ether, and the like.

Typically, the maximum oxygen content of the gasoline base fuel is up to 10% by weight based on the weight of the gasoline base fuel; preferably up to 5% by weight; more preferably up to 3% by weight. In an embodiment, the oxygen content of the gasoline base fuel is up to 3.7% or up to 2.7% by weight.

The gasoline base fuel, and the gasoline fuel composition, preferably has a low or ultra-low sulphur content, for example at most 0.01 % by weight of sulphur based in the weight of the gasoline base fuel or the gasoline fuel composition, respectively; preferably at most 0.005% by weight; more preferably at most 0.001% by weight.

The gasoline base fuel, and the gasoline fuel composition, preferably has a low lead content, such as at most 5 mg/I, more preferably being unleaded gasoline base fuel, i.e. having no lead compounds added thereto.

The gasoline base fuel can be derived from straight run gasoline, polymer gasoline, natural gasoline dimer and trimerized olefins, synthetically produced aromatic hydrocarbon mixtures, or from catalytically cracked or thermally cracked petroleum stocks, and mixtures of these.

Preferably, the gasoline base fuel has a Research Octane Number (RON) above 80, such as above 85, preferably above 90, more preferably above 95. RON is determined according to method ASTM D2699.

In a preferred embodiment, the gasoline base fuel has a RON above 90. In a further preferred embodiment, the gasoline base fuel has a RON above 95.

In an embodiment, the gasoline base fuel has a RON of from 80 to 110, preferably from 90 to 105, more preferably from 90 to 100.

In another embodiment, the gasoline base fuel has a RON of from 85 to 110, preferably from 95 to 105, more preferably from 95 to 100.

The gasoline fuel composition can further comprise conventional fuel additives, in addition to the anti-knock fuel additive of the invention, such as antioxidants, corrosion inhibitors, detergents, dehazers, metal deactivators, valve-seat recession protectant compounds, solvents, carrier fluids, diluents, friction modifiers, dyes and markers.

Preferably, the total amount of such conventional fuel additives in the gasoline fuel composition is up to 1% by weight based on the weight of the gasoline fuel composition. In an embodiment, the amount of such conventional fuel additives in the gasoline fuel composition is in the range of from 0.001% to 1.0% by weight based on the weight of the gasoline fuel composition; preferably from 0.01% to 0.8% by weight. In a particular embodiment, the amount of conventional additives is in the range of from 0.01% to 0.4% by weight based on the weight of the gasoline fuel composition.

In a particular embodiment, the gasoline fuel composition comprises a multifunctional package comprising one or more of said conventional additives.

Suitable antioxidants are known in the art and include phenolic and phenylenediamine compounds, such as 2,4-di-tertbutylphenol, 3,5-di-tertbutyl-4-hydroxy-phenylpropionic acid, BHT, BHB or N,N'-di-sec-butyl-p-phenylenediamine, hydrazine-based antioxidants or thiourea-based antioxidant.

The inventors have observed that the use of thiourea-based antioxidants and hydrazine-based antioxidants provides highly stable gasoline fuel compositions. Therefore, in a particular embodiment, the gasoline fuel composition of the invention comprises a thiourea-based antioxidant, a hydrazine-based antioxidant or a mixture thereof. In an embodiment, the gasoline fuel composition comprises an antioxidant in an amount from 2 to 100 mg, preferably from 3 to 30 mg and more preferably from 4 to 10 mg, per Kg of the gasoline fuel composition.

Suitable corrosion inhibitors are known in the art. They consist typically of a polar head to enable adhesion to the metal surfaces to be protected, and a hydrocarbon tail to ensure fuel solubility. Examples of corrosion inhibitors include carboxylic acids, anhydrides, amines and amine salts of carboxylic acids. In an embodiment, the gasoline fuel composition can comprise a corrosion inhibitor in an amount of up to 200 mg, preferably up to 100 mg, more preferably up to 50 mg, per Kg of the gasoline fuel composition.

Suitable detergents (also referred to as deposit control additives) are known in the art. They typically consist of a polar head, the polarity of which is derived from oxygen or nitrogen molecules, and a hydrocarbon tail, which enables the additive to be fuel soluble. Examples of detergents include amides, amines, polybutene succinimides, polyisobutylene amines, polyether amines, polyolefin amines and Mannich amines. Preferably, the detergent is a nitrogen-containing or oxygen-containing detergent having a hydrophobic hydrocarbon radical with a number average molecular weight in the range of from 300 to 5000 Da.

In an embodiment, the gasoline fuel composition can comprise a detergent in an amount of up to 5000 mg, preferably up to 2000 mg, more preferably up to 1000 mg, per Kg of the gasoline fuel composition. For example, in an amount from 50 to 1000 mg/Kg.

Suitable dehazers (also referred to as demulsifiers or emulsion preventatives) are known in the art. They are typically mixtures of alkoxylate compounds including phenolic resins, esters, polyamines, sulphonates or alcohols which have been reacted with ethylene or propylene oxide. Examples of dehazers include glycol oxyalkylate blends, alkoxylated phenol formaldehyde polymers, phenol/formaldehyde or C₁₋₁₈ alkylphenol/formaldehyde resin oxyalkylates modified by oxyalkylation with C₁₋₁₈ epoxides and diepoxides, and C₁₋₄ epoxide copolymers cross-linked with diepoxides, diacids, diesters, diols, diacrylates, dimethacrylates or diisocyanates, and blends thereof. In an embodiment, the gasoline fuel composition can comprise a corrosion inhibitor in an amount of up to 50 mg, preferably up to 10 mg, more preferably up to 5 mg, per Kg of the gasoline fuel composition. For example, in an amount from 0.5 to 5 mg/Kg.

Suitable solvents, carriers and diluents are well known in the art and include synthetic and mineral oils and solvents.

Examples of suitable mineral carrier oils include fractions obtained in crude oil processing, such as brightstock or base oils having viscosities, for example, from the SN 500 - 2000 class; and also aromatic hydrocarbons, paraffinic hydrocarbons and alkoxyalkanols. Also useful as a mineral carrier oil is a fraction which is obtained in the refining of mineral oil and is known as "hydrocrack oil" (vacuum distillate cut having a boiling range of from about 360 to 500 °C, obtainable from natural mineral oil which has been catalytically hydrogenated under high pressure and isomerized and also deparaffinized) .Examples of suitable synthetic carrier oils are polyolefins (poly-alphaolefins or poly (internal olefins)), (poly)esters, (poly)alkoxylates, polyethers, polyglycols, aliphatic polyether amines, alkylphenol-started polyethers, alkylphenol-started polyether amines and carboxylic esters of long-chain alkanols.

Any solvent and optionally co-solvent suitable for use in fuels may be used in the gasoline fuel composition of the invention. Examples of suitable solvents for use in fuels include: non-polar hydrocarbon solvents such as kerosene, heavy aromatic solvent, toluene, xylene, paraffins, petroleum, white spirits, and the like. Examples of suitable co-solvents include: polar solvents such as esters and, in particular, alcohols (e.g. t-butanol, i-butanol, hexanol, 2-ethylhexanol, 2-propyl heptanol, decanol, isotridecanol, butyl glycols) and alcohol mixtures.

In an embodiment, the gasoline fuel composition can comprise a solvent, carrier or diluent in an amount of up to 8000 mg, preferably up to 5000 mg, more preferably up to 3000 mg, per Kg of the gasoline fuel composition.

Suitable valve-seat recession protectant compounds are known in the art and include, for example, sodium or potassium salts of polymeric organic acids. In an embodiment, the gasoline fuel composition can comprise a valve-seat recession protectant in an amount of up to 200 mg, preferably up to 100 mg, more preferably up to 50 mg, per Kg of the gasoline fuel composition.

Suitable friction modifiers of gasoline are known in the art and include, for example, linoleic acid and its derivatives. In an embodiment, the gasoline fuel composition can comprise a friction modifier in an amount of up to 1000 mg, preferably up to 500 mg, more preferably up to 200 mg, per Kg of the gasoline fuel composition.

One or more conventional fuel additives, or a multifunctional package comprising them, can be added to the gasoline base fuel or to a gasoline fuel composition comprising a gasoline base fuel and the anti-knock fuel additive of the invention.

In another embodiment, one or more conventional fuel additives, or a multifunctional package comprising them, can be added to the anti-knock fuel additive of the invention. Therefore, the fuel additive of the invention can comprise one or more conventional fuel additives as described herein. In this case, the total amount of such conventional fuel additives in the fuel additive of the invention is up to 90% by weight based on the total weight of the fuel additive, preferably up to 35% by weight, more preferably up to 15%

In an embodiment, the gasoline fuel composition is free of metallic octane boosters, such as manganese or ferrocene octane boosters. In a further embodiment, the gasoline fuel composition of the invention is free of metallic compounds, that is, the total content of metallic compounds is less than 0.0005% by weight based on the gasoline fuel composition.

The gasoline fuel composition of the invention is suitable for use in an internal combustion engine of the spark-ignition type known in the art, such as automotive engines as well as in other types of engines, such as off road and aviation engines.

In a further aspect, the invention is directed to the use of the fuel additive of the invention for enhancing the octane number of a gasoline.

In another aspect, the invention is directed to a method for enhancing the octane number of a gasoline, said method comprising adding the fuel additive of the invention to the gasoline.

Suitable and preferred embodiments for the fuel additive are as defined herein. As mentioned above, the fuel additive of the invention provides a synergistic enhancement of the octane number of a gasoline.

The gasoline whose octane number can be enhanced or increased with the fuel additive of the invention can be a gasoline fuel base as defined herein or a gasoline fuel composition comprising a gasoline fuel base and one or more conventional fuel additives as defined herein. Suitable and preferred embodiments for the gasoline fuel base, gasoline fuel composition and conventional fuel additives are as defined herein above.

The increase of octane number in the gasoline may be, for instance, 1 unit or greater, preferably 2 units or greater, compared to the octane number of the gasoline without the fuel additive of the invention. The increase in octane number of the gasoline fuel composition may be at most 10 units, or at most 5 units, compared to the octane number of the gasoline base fuel.

The step of adding the fuel additive to the gasoline can be performed in any stage of the fuel supply process, from the refinery to the retail gasoline station (filling station), including intermediate storage terminals and transport devices. Due to the low toxicity of the fuel additive of the invention, it can be advantageously added to the gasoline at the retail gasoline station.

The anti-knock fuel additive can be added to a gasoline fuel composition comprising one or more conventional fuel additives. Alternatively, the anti-knock fuel additive can be added to a gasoline base fuel, optionally one or more conventional fuel additives may then be added to the resulting composition. In another embodiment, the anti-knock fuel additive may be blended with one or more conventional additives to provide a blend that is later added to a gasoline base fuel or to a gasoline base composition.

### EXAMPLES

The invention is illustrated by means of the following examples which in no case limit the scope of the invention.

### Example 1: Preparation of gasoline composition comprising an anti-knock mixture of m-toluidine (m-tol) and N-methyl-p-anisidine (NMPA)

The gasoline base fuel used in the test was an EN-228 automotive gasoline, Premium type E5 (less than 2.7% oxygen content) and RON higher than 98. This gasoline includes 900 ml/m³ of Repsol multifunctional additive package CTR-BP-6-2827 that includes several components, such as: detergent, dispersant, marker, dyer, demulsifier and anticorrosion additive.

NMPA (95% minimum purity) and m-toluidine (98.5% purity) were blended at room temperature in equal volume proportion. The resulting blend was added to the above gasoline at 1% v/v in closed flasks in order to prevent the loss of volatile compounds. The composition and physical properties of the gasoline composition comprising the anti-knock mixture are shown in Table I. Data were measured using the test method indicated in the Table.

**Table I**

| **Property** | | **Test Method** | **Units** | **Gasoline base** | **Gasoline with 1 % v/v of a 50:50 mixture (by volume) of m-tol:NMPA** |
|---|---|---|---|---|---|
| Research Octane Number (RON) | | ASTM D 2699-18a | - | 98.6 | 100.8 |
| Motor Octane Number (MON) | | ASTM D 2700-18a | - | 87.0 | 88.4 |
| Density (at 15°C) | | ASTM D 4052-18 | Kg/m³ | 746.7 | 751.1 |
| Vapor pressure (DVPE) | | ASTM D 5191-15 | | 56.4 | 55.5 |
| | winter (01/10-10/04) | | KPa | | |
| | summer (01/05-30/09) | | KPa | | |
| Initial boiling point | | ASTM D 86-17 | °C | 34.3 | 34.7 |
| % evaporated at 70°C (E70) | | | % v/v | 30 | 29.5 |
| | winter (01/10-10/04) | | | | |
| | summer (01/05-30/09) | | % v/v | | |
| % evaporated at 100°C (E100) | | | % v/v | 55.9 | 55.3 |
| % evaporated at 150°C (E150) | | | % v/v | 85.8 | 84.6 |
| Final boiling point | | | °C | 203.5 | 208.0 |
| Distillation residue | | | % v/v | 1 | 1.1 |
| Distillation loss | | | % v/v | 0.3 | 0.9 |
| VLI (10 VP + 7 E70) | | | - | 774 | 762 |
| Sulfur content | | ASTM D 4294-16e1 | mg/Kg | 7.6 | 6.8 |
| Lead content | | UNE EN 237:2005 | mg/L | <0.0025 | <0.0025 |
| Copper strip corrosion (3h at 50°C) | | ASTM D 130-18 | rating | 1A | 1A |
| Oxidation stability | | ASTM D 525-12a | min | >960 | >960 |
| Existent gum content (washed) | | ASTM D 381-12 (2017) | mg/100 mL | <0.5 | <0.5 |
| Hydrocarbons: | | UNE EN ISO 22854:2016 | % v/v | 10.8 | 10.9 |
| | Olefins | | | | |
| | Aromatics | | % v/v | 29.8 | 30 |
| | Saturated | | % v/v | 45.8 | 45.1 |
| | Benzene | | % v/v | 0.62 | 0.63 |
| Oxygen content | | | % m/m | 2.34 | 2.4 |
| Oxygenates content | | | % v/v | 0.15 | 0.16 |
| | methanol | | | | |
| | ethanol | | % v/v | 0.65 | 0.66 |
| | isopropyl alcohol | | % v/v | <0.01 | <0.01 |
| | tertbutyl alcohol | | % v/v | <0.01 | 0.09 |
| | isobutyl alcohol | | % v/v | <0.01 | <0.01 |
| | MTBE | | % v/v | 0.36 | 0.36 |
| | ETBE | | % v/v | 12.44 | 12.7 |
| | ethers with 5 or more C | | % v/v | 12.8 | 13.07 |
| | other oxygenates | | % v/v | <0.01 | <0.01 |

As shown in Table I, the anti-knock additive increased the octane number of the gasoline while maintaining the specifications of the EN-228 automotive gasoline.

### Example 2: Determination of synergy for the anti-knock mixture of m-toluidine (m-tol) and N-methyl-p-anisidine (NMPA) in Premium gasoline (RON > 98)

The gasoline base fuel used in the test was an EN-228 automotive gasoline as described in Example 1.

NMPA (95% minimum purity) and m-toluidine (98.5% purity) were used as octane improvers. They were added to the gasoline at the indicated amount in closed flasks in order to prevent the loss of volatile compounds, and magnetic mechanical stirring was applied at room temperature until total dissolution was observed. In the cases of mixture of anilines, they were previously blended at room temperature at the indicated volume proportion.

Research Octane Number (RON) measurements were carried out according to method ASTM D 2699-18a. The Motor Octane Number (MON) measurements were carried out according to method ASTM D 2700-18a. Antiknock requirements of engines are associated to a combination of RON and MON. The octane index used herein is based on latest developments in CONCAWE for nowadays engines, where Octane Index = 1.6*RON - 0.6*MON, where high Motor Octane Numbers leads to a worse antiknock performance. Predicted RON values for mixtures of m-toluidine and NMPA at different volume ratios were calculated by linear volume blending.

Uncertainty of the results was estimated for 95% confidence, as 2*Sᵣ. Sᵣ² is the statistical variance estimator in repeatability conditions for the bracketing procedure A/C of ASTM D2699. Given a repeatability of 0.2, the estimated uncertainty was 0.14. Some control samples were introduced along the experimental program: see entries 5, 9 and 14. Differences between 0.0 and 0.1 with respect to previous results (entries 4, 8 and 13) allowed us to validate the estimated uncertainty.

The results obtained are shown in Table II.

**Table II**

| **Entry** | **Additive (% v/v)** | **Additive dosage (% v/v)** | **RON ASTM D2699** | **Theoreti -cal RON** | **MON ASTM D2700** | **Octan e Index** | **Theoretical Octane Index** |
|---|---|---|---|---|---|---|---|
| 1 | - | - | 98.5 | - | 87.2 | 105.20 | - |
| 2 | m-toluidine | 0.25 | 98.8 | - | 87.9 | 105.34 | - |
| 3 | | 0.50 | 99.3 | - | 88.1 | 106.02 | - |
| 4 | | 1.00 | 100.0 | 100.05 | 88.6 | 106.94 | 106.92 |
| 5 | | | 100.1 | | 88.7 | 106.89 | |
| 6 | | 2.00 | 101.5 | - | 90.3 | 108.22 | - |
| 7 | 75% m-tol | 1.00 | 100.3 | 100.35 | 88.4 | 107.44 | 107.47 |
| | 25% NMPA | | | | | | |
| 8 | 50% m-tol | 1.00 | 100.8 | 100.65 | 88.4 88.5 | 108.24 | 108.03 |
| 9 | 50% NMPA | | 100.8 | | | 108.18 | |
| 10 | 25% m-tol | 1.00 | 101.2 | 100.95 | 88.3 | 108.94 | 108.58 |
| | 75% NMPA | | | | | | |
| 11 | NMPA | 0.25 | 99.4 | - | 87.5 | 106.54 | - |
| 12 | | 0.50 | 100.6 | - | 87.8 | 108.28 | - |
| 13 | | 1.00 | 101.2 | 101.25 | 88.2 | 109.00 | 109.14 |
| 14 | | | 101.3 | | 88.0 | 109.28 | |

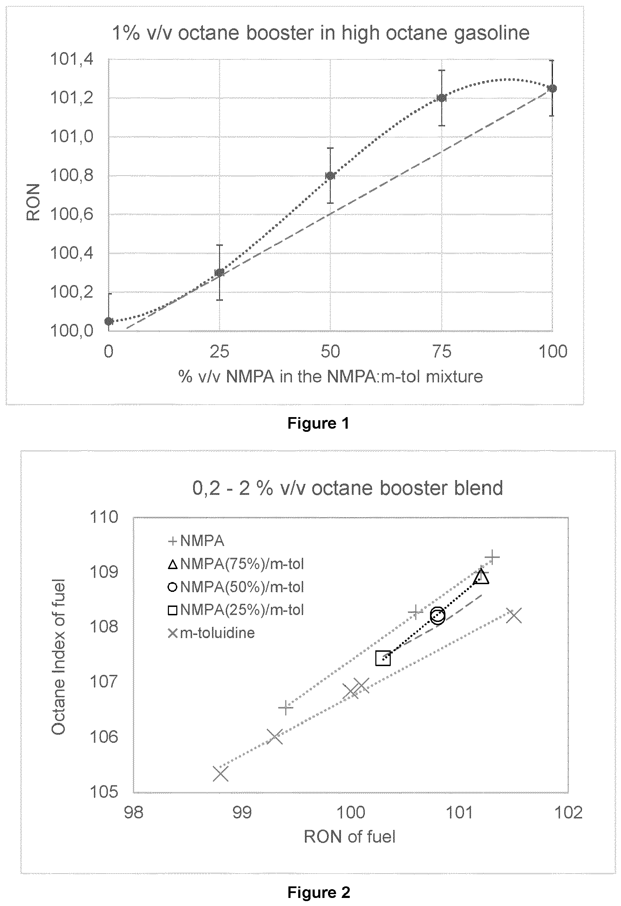

The experimental RON results for these mixtures are shown in Figure 1 (dotted line), compared to the predicted RON for said mixtures (dashed line). The uncertainty level of experimental results for each point is indicated for each result. As seen in the figure, N-methyl-p-anisidine and m-toluidine have synergistic behavior at the claimed volume ratios, the observed RON values were higher than the expected values for said mixtures.

This synergistic behavior for the RON value is very important on engine due to the impact on Octane Index. Figure 2 compares Octane Index with respect to the RON values for different blends of NMPA and m-toluidine (dotted lines). Mixtures with about 50% NMPA in m-toluidine or more result in higher octane indexes than expected (dashed line). This means a better antiknock performance on engine for a given RON value. Real performance of the 75%NMPA/25%m-tol mixture is close to that of NMPA 100%, with a lower cost due to the lower cost of m-toluidine.

### Example 3: Determination of synergy for the anti-knock mixture of m-toluidine (m-tol) and N-methyl-p-anisidine (NMPA) in low octane gasoline (RON > 91) with isopropyl alcohol

The gasoline base fuel used in the test was a mixture of commercial EN-228 standard gasoline (RON 95), which was blended with 5% v/v of standard low octane refining component at room temperature in closed flask. This blend satisfies all EN-228 specifications except antiknock properties, designed to satisfy only 91 RON regular grade octane requirements of category 2 and 3 gasoline specifications of World Wide Fuel Charter 6^{th} (March 2019). The final blend antiknock properties were RON 93.2 (ASTM D2699) and MON 83.5 (ASTM D2700).

Experimental octane testing as well as criteria for theoretical RON and uncertainty were the same as in Example 2. NMPA and m-toluidine materials and blending procedure were the same as in Example 2. Isopropyl alcohol (99.8% purity) was blended with the above gasoline at the indicated amount in closed flasks in order to prevent the loss of volatile compounds.

The results obtained are shown in Table III.

**Table III**

| **Entry** | **m-toluidine (% v/v)** | **NMPA (% v/v)** | **Isopropyl alcohol (% v/v)** | **RON ASTM D2699** | **Theoretical RON** |
|---|---|---|---|---|---|
| 1 | 1.00 | 0.00 | 0.50 | 95.8 | 95.80 |
| 2 | 0.50 | 0.50 | 0.50 | 96.6 | 96.45 |
| 3 | 0.25 | 0.75 | 0.50 | 97.0 | 96.78 |
| 4 | 0.00 | 1.00 | 0.50 | 97.1 | 97.10 |

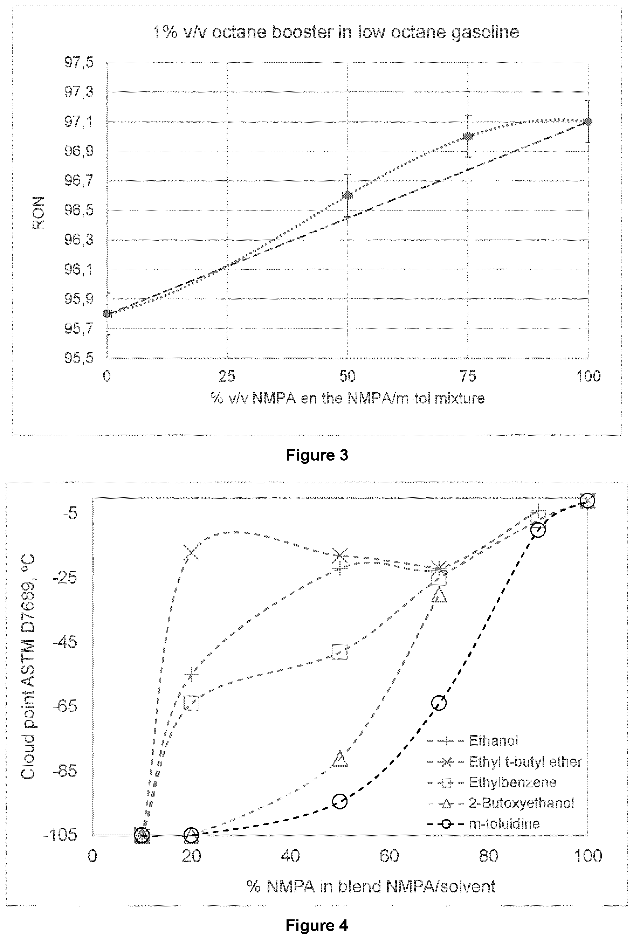

The experimental RON results for these mixtures are shown in Figure 3 (dotted line), compared to the predicted RON for said mixtures (dashed line). Uncertainty of experimental results for each point is indicated by up/down solid lines. As seen in the figure, the mixtures of N-methyl-p-anisidine and m-toluidine at the claimed volume ratios also gave rise to a synergistic effect in a low octane gasoline. The observed RON values were higher than the expected values for said mixtures.

### Example 4: Cloud point of mixtures of NMPA with several solvents

Cold flow performance was evaluated by two methods: cloud point determination by ASTM D7689 (Example 4A) and storage at different temperatures (Example 4B).

### Example 4A

Standard method ASTM D7689 was used as screening method to evaluate the performance at low temperatures. In-house testing has demonstrated that NMPA diluted samples with good behavior at low temperatures (-10°C) present cloud point values lower than -55°C in this assay.

NMPA and m-toluidine were the same products as used in Example 2. Ethanol was a commercial sample that satisfes EN-15376 requirements. Ethyl t-butil ether (ETBE) and ethylbencene were industrial process samples from a Spanish Repsol refinery. The 2-butoxyethanol was purchased from Sigma Aldrich. They were blended with NMPA in closed flasks in order to prevent the loss of volatile compounds, and magnetic mechanical stirring was applied at 40°C until total dissolution was observed. Low temperature testing was performed without delay after blending, in order to assure no memory effects and the same start temperature for all the tests.

The results obtained are shown in Table IV.

**Table IV**

| **Entry** | **NMPA** (%**v/v)** | **Solvent used** | **Solvent (% v/v)** | **Cloud Point ASTM D7689** |
|---|---|---|---|---|
| 1 | 10 | ETBE | 90 | < -105 |
| 2 | 20 | | 80 | -17 |
| 3 | 50 | | 50 | -18 |
| 4 | 70 | | 30 | -22 |
| 5 | 10 | Ethylbenzene | 90 | < -105 |
| 6 | 20 | | 80 | -64 |
| 7 | 50 | | 50 | -48 |
| 8 | 70 | | 30 | -25 |
| 9 | 90 | | 10 | -7 |
| 10 | 10 | Ethanol | 90 | < -105 |
| 11 | 20 | | 80 | -55 |
| 12 | 50 | | 50 | -22 |
| 13 | 70 | | 30 | -22 |
| 14 | 90 | | 10 | -4 |
| 15 | 10 | 2-butoxyethanol | 90 | < -105 |
| 16 | 20 | | 80 | < -105 |
| 17 | 50 | | 50 | -81 |
| 18 | 70 | | 30 | -30 |
| 19 | 10 | m-toluidine | 90 | < -105 |
| 20 | 20 | | 80 | < -105 |
| 21 | 50 | | 50 | -95 |
| 22 | 70 | | 30 | -64 |
| 23 | 90 | | 10 | -10 |
| 24 | 100 | No solvent | 0 | -1 |

The results are summarized in Figure 4. As shown in this figure, m-toluidine was found to be the best solvent for NMPA, preventing its crystallization at low temperatures even at much lower concentrations of m-toluidine than the other assayed solvents. This further supports the use of m-toluidine in combination with NMPA. It not only increases the RON enhancement provided by NMPA, but also improves the handling of NMPA even when it is present as the major component in the mixture.

### Example 4B

Storage at different temperatures is the best method to assure the performance of an additive. After homogenization of 30 grams of the sample during 10 minutes at 40°C, it was stored in a 50 mL vessel, hermetically closed, at different temperatures. The sample was stored for one month at 0°C and at -10°C. Deposits and appearance of different phases were controlled periodically; results after 4 weeks are showed in this example. Solvents and blending procedures were the same as described in Example 4A. The results obtained are shown in Table VI.

**Table VI**

| **Entry** | **NMPA (% v/v)** | **Solvent used** | **Solvent (% v/v)** | **Storage temperature (°C)** | **Deposits and appearance after 4 weeks** |
|---|---|---|---|---|---|
| 1 | 10 | ETBE | 90 | -10 | No deposits, clear and bright |
| 2 | 20 | | 80 | | Some deposits |
| 3 | 50 | | 50 | | Some deposits |
| 4 | 70 | | 30 | | 100% solid |
| 6 | 10 | | 90 | 0 | No deposits, clear and bright |
| 7 | 20 | | 80 | | Some deposits |
| 8 | 50 | | 50 | | 100% solid |
| 9 | 70 | | 30 | | 100% solid |
| 10 | 10 | Ethylbenzene | 90 | -10 | No deposits, clear and bright |
| 11 | 20 | | 80 | | No deposits, clear and bright |
| 12 | 50 | | 50 | | Some deposits |
| 13 | 70 | | 30 | | 100% solid |
| 14 | 10 | | 90 | 0 | No deposits, clear and bright |
| 15 | 20 | | 80 | | No deposits, clear and bright |
| 16 | 50 | | 50 | | Some deposits |
| 17 | 70 | | 30 | | 100% solid |
| 18 | 10 | Ethanol | 90 | -10 | No deposits, clear and bright |
| 19 | 20 | | 80 | | No deposits, clear and bright |
| 20 | 50 | | 50 | | Some deposits |
| 21 | 70 | | 30 | | Some deposits |
| 22 | 10 | | 90 | 0 | No deposits, clear and bright |
| 23 | 20 | | 80 | | No deposits, clear and bright |
| 24 | 50 | | 50 | | 100% solid |
| 25 | 70 | | 30 | | Some deposits |
| 26 | 10 | 2-butoxyethanol | 90 | -10 | No deposits, clear and bright |
| 27 | 20 | | 80 | | No deposits, clear and bright |
| 28 | 50 | | 50 | | No deposits, clear and bright |
| 29 | 70 | | 30 | | No deposits, clear and bright |
| 30 | 10 | | 90 | 0 | No deposits, clear and bright |
| 31 | 20 | | 80 | | No deposits, clear and bright |
| 32 | 50 | | 50 | | No deposits, clear and bright |
| 33 | 70 | | 30 | | No deposits, clear and bright |
| 34 | 20 | m-toluidine | 80 | -10 | No deposits, clear and bright |
| 35 | 50 | | 50 | | No deposits, clear and bright |
| 36 | 70 | | 30 | | No deposits, clear and bright |
| 37 | 20 | | 80 | 0 | No deposits, clear and bright |
| 38 | 50 | | 50 | | No deposits, clear and bright |
| 39 | 70 | | 30 | | No deposits, clear and bright |
| 40 | 100 | No solvent | 0 | -10 | 100% solid |
| 41 | 100 | | 0 | 0 | 100% solid |

Discrete evaluation selection (30, 50, 80 and 90% solvent) gave in most of the cases similar behavior at -10°C and 0°C; with results more consistent at -10°C. The worst performance was with ETBE blends, where only samples with 90% dilution did not present deposits and maintained clear and bright appearance at the end of testing. In the cases of aromatic (ethylbenzene) or alcohol (ethanol) the minimum solvent requirement was 80%. The best performance was observed for 2-butoxyethanol and m-toluidine, where 30% of solvent was enough to guarantee a proper performance even at -10°C. These results further demonstrate the ability of m-toluidine to act as a solvent for NMPA.

### Example 5: Determination of the compatibility of anti-knock mixture of m-toluidine (m-tol) and N-methyl-p-anisidine (NMPA) with engine lubricant oil

The test used to evaluate the engine lubricant compatibility was a modification of CEC L-109-14 oxidation test for engine lubricants, where lubricant oil was mixed with 4.5% v/v gasoline in order to simulate the diluted lubricant oil found in engines. The engine lubricant to be tested was also contaminated with the aniline or mixture of anilines used as octane booster.

The concentration of gasoline in the tested oil lubricant is considered representative of fuel contamination in an aged engine lubricant under typical use in light duty vehicles and this level of contamination is broadly accepted in lubricant testing.

Aniline contamination in lubricant was evaluated in the range of 0.5 to 1.5% by volume. The selected range of quantity of contamination to simulate the aging conditions in real engine lubricant was based on information from experimental engine endurance test using gasoline with aniline octane booster. The fuel used on engine endurance test was a commercial Premium gasoline (RON 98, 900 ml/m³ multifunctional additive package) with enough NMPA based octane booster to increase RON to higher than 100. The engine on this test was a M271 E18. The engine was running for more than 270 hours, under very severe conditions to promote sludge formation at lubricant system. After this endurance test, aniline and fuel contamination on engine lubricant was analyzed: aniline concentration was lower than 0.6% w/w and fuel dilution lower than 7% w/w. Therefore, the range selected for aniline contamination on engine lubricant tested at laboratory scale, from 0.5 to 1.5%, was considered representative and severe enough.

The final mixture was stored at 156°C for 168 hours, using 100 mg/kg of Fe (Fe-III acetylacetonate) as catalyst and with an airflow of 10 L/h. The oxidation of engine lubricant was controlled along the test by using different parameters, including the oil kinematic viscosity at 100°C, measured following standard ASTM D445. Observation of deposits remaining on empty flask after the test is a very useful method to control the stability of oil.

Two engine lubricants were used on these examples: Repsol Elite Evolution Long Life 5W30, a very common low sulfated ash lubricant for light duty engines that satisfies ACEA A3 specifications; and Repsol Elite Common Rail 5W30, a high sulfated ash lubricant that satisfies ACEA A3/B4. The gasoline base, NMPA and m-toluidine used were the same as in Example 1.

Lubricant, gasoline and anilines were blended in closed flasks in order to prevent the loss of volatile compounds, and magnetic mechanical stirring was applied at room temperature until total dissolution was observed.

The results obtained are shown in Table VII.

**Table VII**

| Motor oil | Motor oil (% v/v) | Gasoline contamination (% v/v) | Octane booster contamination (% v/v) | Octane booster blend | Viscosity at start of test (mm²/s at 100°C) | Viscosity at end of test (mm²/s at 100°C) |
|---|---|---|---|---|---|---|
| Repsol Elite Evolution Long Life 5W30 - ACEA C3 (low sulfated ash) | 95.5 | 4.5 | 0.0 | -- | 9.651 | 8.901 |
| | 99.5 | | 0.5 | NMPA 100% | 9.558 | 8.137 |
| | 99.0 | | 1.0 | | 9.393 | 8.140 |
| | 98.5 | | 1.5 | | 9.233 | 9.661 |
| | 99.5 | | 0.5 | NMPA 50% v/v and m-tol | 10.330 | 9.347 |
| | 99.0 | | 1.0 | | 10.120 | 9.580 |
| | 98.5 | | 1.5 | | 9.730 | 9.777 |
| Repsol Elite Common Rail 5W30 - ACEA A3/B4 (high sulfated ash) | 100.0 | | 0.0 | -- | 9.346 | 10.330 |
| | 98.5 | | 1.5 | NMPA 100% | 8.899 | 10.900 |
| | 99.0 | | 1.0 | NMPA 50% v/v and m-tol | 9.367 | 10.710 |

Adherent insoluble product observation and viscosity change in contaminated engine lubricant demonstrate that blending m-toluidine with NMPA improves the compatibility with engine lubricant.

The loss of viscosity is associated with cracking degradation, whereas polymerization degradation increases viscosity. As shown in the table above, the mixture of NMPA and m-toluidine, for the same aniline concentration, gave a lower change of the viscosity compared to the reference standard used oil at any contamination level.

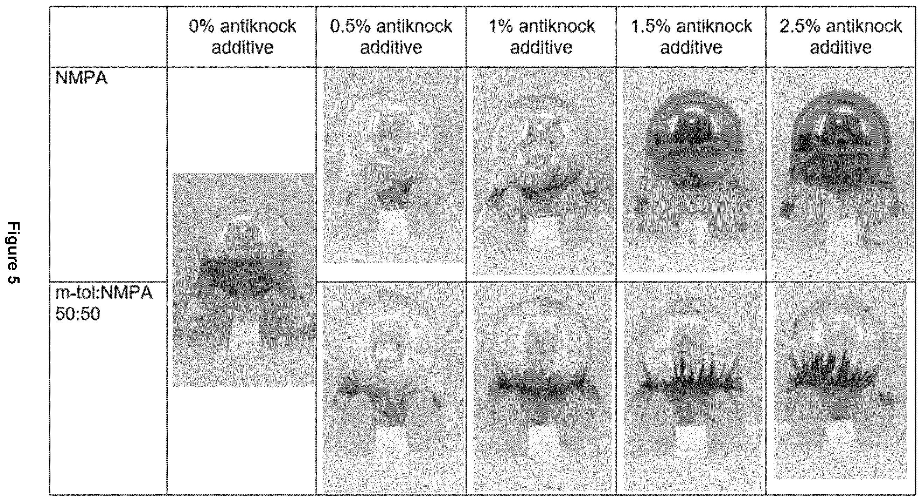

Drained flask after ageing test of ACEA C3 engine lubricant is show in Figure 5. Adherent insoluble products of degradation remain at the flask. Adherent insolubles were reduced with m-toluidine, this improvement increased as the amount of octane booster increased and is clearly observed at 1.5% of aniline contamination.

The same tendency was observed when the compatibility of different blends for octane booster was tested with engine lubricant ACEA A3/B4 (high sulfated ash).

## Claims

1. Fuel additive comprising a mixture of N-methyl-p-anisidine and m-toluidine in a volume ratio of from 45:55 to 95:5.

2. Fuel additive according to claim 1, wherein the volume ratio of N-methyl-p-anisidine to m-toluidine is from 45:55 to 90:10, preferably from 45:55 to 85:15.

3. Fuel additive according to claim 2, wherein the volume ratio of N-methyl-p-anisidine to m-toluidine is from 50:50 to 90:10, preferably from 50:50 to 75:25.

4. Fuel additive according to any one of claims 1 to 3, which further comprises an antioxidant.

5. Gasoline fuel composition comprising a fuel additive as defined in any one of claims 1 to 4 and a gasoline base fuel.

6. Gasoline fuel composition according to claim 5, comprising from 0.2% to 5% by volume of the fuel additive relative to the total volume of the gasoline fuel composition.

7. Gasoline fuel composition according to claim 6, comprising from 0.5% to 3% by volume of the fuel additive relative to the total volume of the gasoline fuel composition.

8. Gasoline fuel composition according to claim 5, comprising from 0.2% to 5% by volume relative to the volume of the gasoline fuel composition, preferably from 0.5% to 3% by volume, of a combination of m-toluidine and NMPA, wherein the volume ratio of NMPA to m-toluidine is from 45:55 to 95:5, preferably from 45:55 to 90:10.

9. Gasoline fuel composition according to claim 8, wherein the volume ratio of NMPA to m-toluidine is from 45:55 to 85:15, preferably from 50:50 to 75:25.

10. Gasoline fuel composition according to any one of claims 5 to 9, wherein the gasoline base fuel comprises saturated hydrocarbons, olefinic hydrocarbons, aromatic hydrocarbons and, optionally, oxygenated hydrocarbons.

11. Gasoline fuel composition according to claim 10, comprising 30% to 80% by volume of saturated hydrocarbons, from 2% to 30% by volume of olefinic hydrocarbons, and from 15% to 60% by volume of aromatic hydrocarbons and, optionally, from 0.1% to 50% of oxygenated hydrocarbons.

12. Gasoline fuel composition according to any one of claims 5 to 11, wherein the gasoline composition further comprises one or more additives selected from the group consisting of anti-oxidants, corrosion inhibitors, detergents, dehazers, metal deactivators, valve-seat recession protectant compounds, dyes, solvents, carrier fluids, friction modifiers, diluents and markers.

13. Gasoline fuel composition according to any one of claims 5 to 12, wherein the gasoline base fuel has an octane number of from 80 to 110, preferably from 90 to 100, as determined according to ASTM D2699.

14. Use of a fuel additive as defined in any one of claims 1 to 4 for enhancing the research octane number of a gasoline.

15. Method for enhancing the octane number of a gasoline comprising adding the fuel additive according to any one of claims 1 to 4 to the gasoline.

## Patentansprüche

1. Kraftstoffzusatz, umfassend ein Gemisch aus N-Methyl-p-anisidin und m-Toluidin in einem Volumenverhältnis von 45:55 bis 95:5.

2. Kraftstoffzusatz nach Anspruch 1, wobei das Volumenverhältnis von N-Methyl-p-anisidin zu m-Toluidin von 45:55 bis 90:10 ist, vorzugsweise von 45:55 bis 85:15.

3. Kraftstoffzusatz nach Anspruch 2, wobei das Volumenverhältnis von N-Methyl-p-anisidin zu m-Toluidin von 50:50 bis 90:10 ist, vorzugsweise von 50:50 bis 75:25.

4. Kraftstoffzusatz nach einem der Ansprüche 1 bis 3, welcher außerdem ein Antioxidans umfasst.

5. Benzinkraftstoffzusammensetzung, umfassend einen Kraftstoffzusatz, wie in einem der Ansprüche 1 bis 4 definiert, und einen Benzin-Basiskraftstoff.

6. Benzinkraftstoffzusammensetzung nach Anspruch 5, umfassend von 0,2% bis 5% Volumenanteil Kraftstoffzusatz im Verhältnis zum Gesamtvolumen der Benzinkraftstoffzusammensetzung.

7. Benzinkraftstoffzusammensetzung nach Anspruch 6, umfassend von 0,5% bis 3% Volumenanteil Kraftstoffzusatz im Verhältnis zum Gesamtvolumen der Benzinkraftstoffzusammensetzung.

8. Benzinkraftstoffzusammensetzung nach Anspruch 5, umfassend von 0,2% bis 5% Volumenanteil im Verhältnis zum Volumen der Benzinkraftstoffzusammensetzung, vorzugsweise von 0,5% bis 3% Volumenanteil, einer Kombination aus m-Toluidin und NMPA, wobei das Volumenverhältnis von NMPA zu m-Toluidin von 45:55 bis 95:5 ist, vorzugsweise von 45:55 bis 90:10.

9. Benzinkraftstoffzusammensetzung nach Anspruch 8, wobei das Volumenverhältnis von NMPA zu m-Toluidin von 45:55 bis 85:15 ist, vorzugsweise von 50:50 bis 75:25.

10. Benzinkraftstoffzusammensetzung nach einem der Ansprüche 5 bis 9, wobei der Benzin-Basiskraftstoff gesättigte Kohlenwasserstoffe, olefinische Kohlenwasserstoffe, aromatische Kohlenwasserstoffe und, wahlweise, sauerstoffhaltige Kohlenwasserstoffe umfasst.

11. Benzinkraftstoffzusammensetzung nach Anspruch 10, umfassend 30% bis 80% Volumenanteil gesättigte Kohlenwasserstoffe, von 2% bis 30% Volumenanteil olefinische Kohlenwasserstoffe und von 15% bis 60% Volumenanteil aromatische Kohlenwasserstoffe und, wahlweise, von 0,1% bis 50% sauerstoffhaltige Kohlenwasserstoffe.

12. Benzinkraftstoffzusammensetzung nach einem der Ansprüche 5 bis 11, wobei die Benzinzusammensetzung außerdem einen oder mehrere Zusätze umfasst, ausgewählt aus der Gruppe, bestehend aus Antioxidantien, Korrosionsinhibitoren, Detergenzien, Dehazern, Metalldesaktivatoren, Schutzmitteln für Ventilsitzrezessionen, Farbstoffen, Lösungsmitteln, Trägerflüssigkeiten, Reibungsmodifikatoren, Verdünnungsmitteln und Markern.

13. Benzinkraftstoffzusammensetzung nach einem der Ansprüche 5 bis 12, wobei der Benzin-Basiskraftstoff eine Oktanzahl von 80 bis 110 hat, vorzugsweise von 90 bis 100, wie nach ASTM D2699 bestimmt.

14. Verwendung eines Kraftstoffzusatzes, wie in einem der Ansprüche 1 bis 4 definiert, zum Verbessern der Research-Oktanzahl eines Benzins.

15. Verfahren zum Verbessern der Oktanzahl eines Benzins, umfassend das Hinzufügen des Kraftstoffzusatzes nach einem der Ansprüche 1 bis 4 zu dem Benzin.

## Revendications

1. Additif pour carburant comprenant un mélange de N-méthyl-p-anisidine et de m-toluidine dans un rapport volumique de 45:55 à 95:5.

2. Additif pour carburant selon la revendication 1, dans lequel le rapport volumique de la N-méthyl-p-anisidine à la m-toluidine est de 45:55 à 90:10, de préférence de 45:55 à 85:15.

3. Additif pour carburant selon la revendication 2, dans lequel le rapport volumique de la N-méthyl-p-anisidine à la m-toluidine est de 50:50 à 90:10, de préférence de 50:50 à 75:25.

4. Additif pour carburant selon l'une quelconque des revendications 1 à 3, qui comprend en outre un antioxydant.

5. Composition de carburant essence comprenant un additif pour carburant tel que défini dans l'une quelconque des revendications 1 à 4 et un carburant de base essence.

6. Composition de carburant essence selon la revendication 5, comprenant de 0,2% à 5% en volume de l'additif pour carburant par rapport au volume total de la composition de carburant essence.

7. Composition de carburant essence selon la revendication 6, comprenant de 0,5% à 3% en volume de l'additif pour carburant par rapport au volume total de la composition de carburant essence.

8. Composition de carburant essence selon la revendication 5, comprenant de 0,2 % à 5 % en volume par rapport au volume de la composition de carburant essence, de préférence de 0,5 % à 3 % en volume, d'une combinaison de m-toluidine et de NMPA, le rapport volumique du NMPA à la m-toluidine étant de 45:55 à 95:5, de préférence de 45:55 à 90:10.

9. Composition de carburant essence selon la revendication 8, dans laquelle le rapport volumique de NMPA à la m-toluidine est de 45:55 à 85:15, de préférence de 50:50 à 75:25.

10. Composition de carburant essence selon l'une quelconque des revendications 5 à 9, dans laquelle le carburant base essence comprend des hydrocarbures saturés, des hydrocarbures oléfiniques, des hydrocarbures aromatiques et, optionnellement, des hydrocarbures oxygénés.

11. Composition de carburant essence selon la revendication 10, comprenant de 30% à 80% en volume d'hydrocarbures saturés, de 2% à 30% en volume d'hydrocarbures oléfiniques, et de 15% à 60% en volume d'hydrocarbures aromatiques et, optionnellement, de 0,1% à 50% d'hydrocarbures oxygénés.

12. Composition de carburant essence selon l'une quelconque des revendications 5 à 11, dans laquelle la composition d'essence comprend en outre un ou plusieurs additifs choisis dans le groupe constitué d'antioxydants, d'inhibiteurs de corrosion, de détergents, de désembueurs, de désactivateurs de métaux, de composés de protection contre la récession des sièges de soupape, de colorants, de solvants, de fluides porteurs, de modificateurs de friction, de diluants et de marqueurs.

13. Composition de carburant essence selon l'une quelconque des revendications 5 à 12, dans laquelle le carburant de base essence a un indice d'octane allant de 80 à 110, de préférence allant de 90 à 100, tel que déterminé selon la norme ASTM D2699.

14. Utilisation d'un additif pour carburant tel que défini dans l'une quelconque des revendications 1 à 4 pour améliorer l'indice d'octane recherche d'une essence.

15. Procédé d'amélioration de l'indice d'octane d'une essence comprenant le fait d'ajouter à l'essence de l'additif pour carburant selon l'une quelconque des revendications 1 à 4.
